# EUROPEAN PATENT APPLICATION

(11) **EP 4 575 429 A2**
(43) Date of publication of application: **25.06.2025**
(21) Application number: 24200088.3
(22) Date of filing: 12.09.2024
(51) Int. Cl.: G01J 3/02, G01J 5/0806, G01J 5/08, G01J 5/0831, G01J 5/00, G01J 3/12, G01J 5/04, B23K 26/03

(54) **OPTICAL DETECTION DEVICE AND DETECTION METHOD FOR LASER PROCESSING**

(30) Priority: 22.12.2023 CN 202311776949
(71) Applicant: Guangzhou Diligine Photonics Co., Ltd., Guangzhou, Guangdong 510220 (CN)
(72) Inventor: XIE, Pin, Guangdong (CN); LI, Jingxian, Guangdong (CN); BAI, Tianxiang, Guangdong (CN); WANG, Lin, Guangdong (CN)
(74) Representative: 2SPL Patentanwälte PartG mbB

(57) **Abstract**

The present disclosure provides an optical detection device and a detection method for laser processing. The optical detection device includes: a housing, a beamsplitter pathway, a first photosensor, and a first diaphragm; wherein the housing is configured to receive radiated light from an external detection region, and process the radiated light from the aperture using the beamsplitter pathway; the beamsplitter pathway is configured to receive radiated light entering the housing through the aperture, and converge the radiated light onto a photosensitive surface through the first focusing lens; the first photosensor is configured to receive an optical signal in a first wavelength range; and the first diaphragm is arranged between the first photosensor and the first focusing lens, and is positioned on an approximate focal plane of the first focusing lens. In this way, radiated light may be accurately selected for a machining region, and impacts caused by the vignetting effect of an optical path is reduced.

## Description

### TECHNICAL FIELD

The present disclosure relates to the technical field of optical detection, and in particular, relates to an optical detection device and a detection method for laser processing.

### BACKGROUND

Laser processing involves the interaction between light and a material. In this process, a laser beam emitted by a laser device is transmitted through an optical fiber and lenses and is then focused on the surface of the material, and the material absorbs laser energy and is thus molten and evaporated, thereby achieving beam-material interactions of the welding material. Due to the thermal effects of the laser beam, a molten pool is formed in a interactions region of the material to be processed, and a plurality of signals such as plasma, metal vapor, radiation optical signals, and radiation sound signals would be generated in the laser welding processing. Numerous studies have shown that these signals are closely related to the quality of laser processing. When the defects such as welding overlap, insufficient solder, splashing and contamination occur during the laser processing, the radiation signals may exhibit different signal characterizations.

Although there are various methods and equipment used for detecting the quality of laser processing, the intense melting or evaporation of the material during laser processing generates optical radiation. Therefore, acquiring the radiation optical signals during laser processing as original detection signals has broader applicability. By acquiring data from the radiation optical signals during laser processing, and subsequently decomposing, transforming, and machining these signals, it is possible to obtain characteristic data that reflects the quality of laser processing. This characteristic data, when analyzed by a discrimination system, allows for real-time detection of the quality of laser processing.

Chinese Patent No. CN112461860A discloses a method, device, and system for detecting the quality of a machining point in a laser-machined workpiece." The solution involves receiving infrared radiation signals in a wavelength range of 1250 nm to 1700 nm using an infrared radiation signal sensor, receiving visible radiation signals in a wavelength range from 400 nm to 700 nm using a visible radiation signal sensor, and receiving laser processing reflection signals using a laser processing reflection signal sensor. Similarly, Chinese Patent No. CN112894126A discloses a method and system for adjusting detection parameters during a laser processing. This method involves pre-establishing a correspondence between types of laser processing defects and characteristics of detection signal parameters, loading detection data of the laser processing, and determining the baseline values of the detection signal parameters based on the correspondence and detection data of the laser machining process. This approach allows for the rapid acquisition of the baseline values for the detection signal parameters of the laser machining process. Consequently, these preliminarily obtained baseline values may be used for real-time analysis and comparison of signal data during actual machining of each workpiece, thereby enhancing the quality detection process of laser processing.

### SUMMARY

Various embodiments of the present disclosure provide an optical detection device and a detection method for laser processing, to improve directionality of an optical detection region, acquire more accurate detection results that reflect machining quality, and enhance precision of the optical detection device.

In a first aspect, some embodiments of the present disclosure provide an optical detection device. The optical detection device includes: a housing, a beamsplitter pathway, a first photosensor, and a first diaphragm; wherein an aperture is arranged in the housing, the housing is configured to receive radiated light from an external detection region through the aperture, and the first photosensor is configured to process the radiated light from the aperture through the beamsplitter pathway which is built-in the housing; the beamsplitter pathway includes a first focusing lens and is configured to receive radiated light from the external detection region entering the housing through the aperture, and converge the radiated light onto a photosensitive surface of the first photosensor through the first focusing lens; the first photosensor is configured to receive an optical signal in a first wavelength range from the beamsplitter pathway; and the first diaphragm is arranged between the first photosensor and the first focusing lens on the beamsplitter pathway, and is positioned on an approximate focal plane of the first focusing lens, such that the optical signal in the first wavelength range reaches the photosensitive surface of the first photosensor upon traveling through the first diaphragm.

Therefore, in the embodiments of the present disclosure, by arranging a focusing lens on the beamsplitter pathway and arranging a diaphragm at a position near the focal plane of the focusing lens, radiated light entering a defined machining region of the rear photosensor through the diaphragm is selected by defining an aperture size of the diaphragm, and hence, radiated light is accurately selected for the machining region, and impacts caused by the vignetting effect of an optical path to intensity of radiated light on the photosensitive surface of the photosensor is reduced.

In some embodiments, in the optical detection device, the first diaphragm is positioned on a focal plane of the first focusing lens; and the first photosensor is an infrared photosensor, and is configured to receive an optical radiation signal of an infrared wavelength range at a machining point during laser processing as the optical signal in the first wavelength range.

Therefore, in the embodiments of the present disclosure, since the temperature at the center of a laser-machined keyhole is much higher than the temperature at the periphery of the molten pool during laser processing detection, by providing a diaphragm at the focal plane of a focusing lens, the impacts caused by infrared light radiated from the center of the keyhole onto infrared light in a detection region of interest at the periphery of the molten pool during detection are also reduced.

In some embodiments, the optical detection device further includes: a second photosensor and a second diaphragm; and the beamsplitter pathway further includes a second focusing lens arranged on the beamsplitter pathway, and the beamsplitter pathway is configured to split radiated light into radiated light in at least two different wavelength ranges, output an optical signal in a first wavelength range to the first photosensor through the first focusing lens, and output an optical signal in a second wavelength range to the second photosensor through the second focusing lens, wherein the optical signal in the first wavelength range is different from the optical signal in the second wavelength range; and the second diaphragm is arranged between the second photosensor and the second focusing lens, and is positioned on or in the vicinity of a focal plane of the second focusing lens, such that the optical signal in the second wavelength range reaches a photosensitive surface of the second photosensor upon traveling through the second diaphragm.

Therefore, in the embodiments of the present disclosure, in the case that a plurality of photosensors simultaneously detect the same external laser processing point, different diaphragms are used by means of the beamsplitter pathway and the same or different optical signal frequency bands are selected to observe the same or different laser processing regions, such that optical detection means is diversified, and applicability of the optical detection device is enhanced.

In some embodiments, in the optical detection device, the second diaphragm is positioned on the focal plane of the second focusing lens, and an aperture of the first diaphragm is different from an aperture of the second diaphragm.

In some embodiments, in the optical detection device, the first diaphragm and/or the second diaphragm is a center obscuration, and radiated light in a specific region in a middle of the diaphragm is filtered by the center obscuration.

Therefore, in the embodiments of the present disclosure, the inner part of the diaphragm may be defined into different shapes for different detection requirements.

In some embodiments, the optical detection device further includes: a calibration light source arranged inside the housing, wherein the calibration light source is configured to radiate calibration light to the beamsplitter pathway, and radiate the calibration light to an external detection region through the aperture.

Therefore, in the embodiments of the present disclosure, arranging an internal diaphragm not only facilitates convenient calibration when aligning the photosensitive regions of a plurality of internal photosensors but also reduces the inconvenience of traditional calibration methods involving disassembly of internal optics or repeated calibration of internal optical paths during on-site application of the device, such that the user experience of the device is improved. Furthermore, with configuration of the diaphragm, during calibration of the internal optical paths, positioning of the optical sensors is assisted by the diaphragm, the external detection regions are selectively screened and detected, the calibration and alignment process of the optical paths is streamlined, and the detection accuracy is improved.

In some embodiments, a focusing lens is arranged at the aperture or outside the optical detection device, wherein the focusing lens establishes an object-image relationship with the first focusing lens, and is configured to collimate radiated light at a machining point of the external detection region into parallel light, and focus the parallel light to the center obscuration by the first focusing lens after transmitting the parallel light to the first focusing lens over the beamsplitter pathway; and the beamsplitter pathway is further configured to radiate calibration light from a calibration light source to the aperture, such that the calibration light at the aperture is coaxial with ambient radiated light along an optical axis of the aperture.

In some embodiments, the beamsplitter pathway includes a plurality of beamsplitters arranged in parallel along an optical axis of the aperture in sections and defining a specific angle with the optical axis; wherein each of the beamsplitters is configured to split the ambient radiated light from the optical axis of the aperture to a corresponding photosensor; and one or more of a filter, a neutral density filter, and a focusing lens is arranged between each of the beamsplitters and the corresponding photosensor.

In some embodiments, the calibration light source is arranged at a tail end of a last beamsplitter distant from the aperture, such that the calibration light is successively transmitted through the plurality of beamsplitters arranged in parallel and is converged onto an external detection region through the focusing lens.

In some embodiments, the calibration light source separately radiates, by one of the plurality of beamsplitters arranged on the beamsplitter pathway, calibration light from a calibration light source to the aperture, such that the calibration light at the aperture is coaxial with ambient radiated light along an optical axis of the aperture.

In some embodiments, the housing includes an integral bottom case and a cover plate securely attached on a top of the bottom case; wherein the bottom case includes a reference bottom surface and a plurality of outer sidewalls surrounding the reference bottom surface that are integrally molded, the reference bottom surface and the plurality of outer sidewalls define an internal cavity; and the aperture is defined in one of the outer sidewalls, and the radiated light is received from the external detection region through the aperture; wherein the reference bottom surface of the bottom case extends upwards to form a mount integrally molded with the bottom case; wherein the mount includes one or more of a beamsplitter holder, a focusing lens holder, a neutral density filter holder, a filter holder, or a calibration light source holder; and wherein a beamsplitter pathway, a first photosensor, a second photosensor, and a calibration light source are embedded or secured via the mount; wherein the beamsplitter pathway includes a reference bottom surface and one or more of a beamsplitter, a focusing lens, a neutral density filter, or a filter.

In a second aspect, some embodiments of the present disclosure provide a detection method for laser processing, applicable to an optical detection device comprising a photosensor, a first diaphragm, a photosensor and a focusing lens of a beamsplitter pathway. The detection method includes:
receiving, though the photosensor, an optical radiation signal from at least one machining point in a laser processing path, wherein the optical radiation signal comprises one or more of an infrared radiation signal, a visible light radiation signal, and a machining laser reflection signal;
determining, based on the first diaphragm arranged between the photosensor and a focusing lens of a beamsplitter pathway, a radiated light region of the machining point determined by the photosensor; wherein the first diaphragm is positioned on an approximate focal plane of the first focusing lens; and
determining, based on a shape of an optical aperture of the first diaphragm, whether the photosensor receives central radiated light or edge radiated light at a keyhole at the laser processing point.

Therefore, in the embodiments of the present disclosure, by arranging a focusing lens on the beamsplitter pathway and arranging a diaphragm at a position near the focal plane of the focusing lens, radiated light entering a defined machining region of the rear photosensor through the diaphragm is selected by defining an aperture size of the diaphragm, and hence, radiated light is accurately selected for the machining region, and impacts caused by the vignetting effect of an optical path to intensity of radiated light on the photosensitive surface of the photosensor is reduced.

In some embodiments, the first diaphragm is a center obscuration, and radiated light at a center of the keyhole at the laser processing point is filtered by the center obscuration.

### BRIEF DESCRIPTION OF THE DRAWINGS

FIG. 1 is a schematic diagram of an optical path of an optical detection device according to some embodiments of the present disclosure;
FIG. 2 is another schematic diagram of an optical path of an optical detection device according to some embodiments of the present disclosure;
FIG. 3 is a schematic structural diagram of a diaphragm in an optical detection device according to some embodiments of the present disclosure;
FIG. 4 is a schematic diagram of an optical path of an optical detection device according to some embodiments of the present disclosure;
FIG. 5 is a schematic diagram of an optical path of an optical detection device according to some embodiments of the present disclosure;
FIG. 6 is a schematic structural diagram of a cover plate of a housing according to some embodiments of the present disclosure;
FIG. 7 is a schematic structural diagram of a bottom case of a housing of a an optical detection device according to some embodiments of the present disclosure;
FIG. 8 is a flowchart of a method for calibrating an optical path according to some embodiments of the present disclosure; and
FIG. 9 is a flowchart of a detection method for laser processing according to some embodiments of the present disclosure.

### DETAILED DESCRIPTION

The technical solutions contained in the embodiments of the present disclosure are described in detail clearly and completely hereinafter with reference to the accompanying drawings for the embodiments of the present disclosure. Apparently, the described embodiments are only a portion of embodiments of the present disclosure, but not all the embodiments of the present disclosure. Based on the embodiments of the present disclosure, all other embodiments derived by persons of ordinary skill in the art without any creative efforts shall fall within the protection scope of the present disclosure.

The terminology used in the embodiments of the present disclosure is for the purpose of describing particular embodiments only and is not intended to limit the present disclosure. As used in the embodiments of the present disclosure, the accompanying drawings and the appended claims, the singular forms "a," "an," and "the" are intended to include the plural forms as well, unless the context clearly indicates otherwise. It should be understood that the term "and/or" used herein is merely an association relationship for describing associated objects, which indicates three types of relationships, for example, A and/or B means (A), (B), or (A and B). In addition, the forward-slash symbol "/" generally represents an "or" relationship between associated objects before and after the symbol. It should be understood that terms such as "first" and "second" are not to be construed as indicating or implying the relative importance or implicitly indicating the number of indicated technical features below, but are only to differentiate different technical features or parts. Likewise, the article like "a" or "an" does not imply a specific quantity but rather indicate "at least one." In the embodiments of the present disclosure, the term "a plurality of" or "the plurality of" means two or more unless otherwise specified. The optical lens involved in the present disclosure may be a set of optical lenses. For example, a focusing lens may be understood as a set of focusing lenses with focusing functionality that is formed by one or more lenses arranged, bonded, or the like. The beamsplitter may be understood as a set of lenses with beamsplitting functionality that is formed by one or more lenses by beamsplitting, refraction, reflection, transmission, or the like.

During laser processing a workpiece surface by a laser processing head, it is often necessary to split a laser processing optical path into one or more optical paths for an optical detection system to monitor the laser processing process and to achieve various photoelectric conversions for acquiring radiation optical signals during laser processing monitoring. Since the laser processing system involves a collimated optical path, a focusing optical path, even a galvanometer swing optical path, or the like, the optical detection system may require a plurality of photosensors to detect the machining process. By dividing the radiated light in the laser processing region into specific wavelength ranges and outputting them to the photosensors of corresponding wavelength ranges, the relevant photosensors detect the change of intensity of the optical signals in each wavelength range to analyze and determine the quality of the laser processing.

In the traditional detection process for laser processing, by a calibration scheme, before delivery of an optical detection device from factory, after the optical paths of the radiated light corresponding to the plurality of photosensors are calibrated and aligned, when the optical detection device is used on the customer site, the optical paths of the radiated light corresponding to the plurality of photosensors are further aligned with the laser processing optical path (optical axes of the corresponding optical paths are consistent or parallel), and hence the photosensitive surface of the photosensor is aligned with a laser processing point in the laser processing region.

In production and research and development, the applicant has found that the traditional solution of aligning the photosensitive surface of the photosensor with the laser processing point in the laser processing region could not clearly reflect some laser processing defects in monitoring the quality of the laser processing point in the laser processing region. In laser welding, for example, there is a weld defect relatively associated with the optical radiation signals outside the center of a laser-machined keyhole. If the corresponding laser-machined keyhole is monitored by a photosensor, the optical signals at the center of the stronger keyhole may mask useful optical signals in the region of interest. Therefore, it is necessary to shield strong signal interference at the center of the laser processing point or other regions and improve the signal-to-noise ratio of the corresponding defect signal.

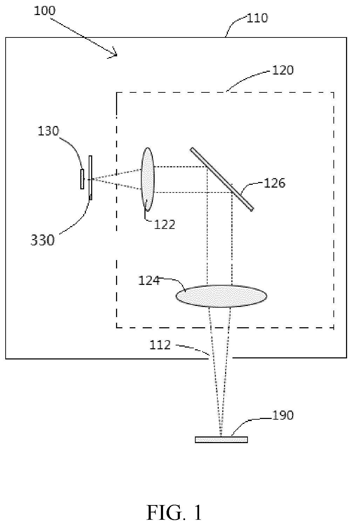

Referring to FIG. 1, some embodiments of the present disclosure provide an optical detection device 100. The optical detection device 100 includes: a housing 110, a beamsplitter pathway 120, a first photosensor 130, and a first diaphragm 330. An aperture 112 is arranged in the housing 110, and is configured to receive radiated light from an external detection region by the aperture 112. It may be understood that a focusing lens may be arranged in the aperture 112, and ambient radiated light is collimated into parallel light by the focusing lens. Alternatively, the collimated parallel light is directly received through the aperture 112. The housing 110 processes radiated light from the aperture 112 by the beamsplitter pathway 120 and the first photosensor 130. A first focusing lens 122 is arranged on the beamsplitter pathway 120, and the beamsplitter pathway 120 is configured to receive radiated light from the external detection region 190 entering the housing 110 through the aperture 112, and converge the radiated light onto a photosensitive surface of the first photosensor 130 by the first focusing lens 122. The first photosensor 130 is configured to receive an optical signal in a first wavelength range from the beamsplitter pathway 120. The first diaphragm 330 is arranged between the first photosensor 130 and the first focusing lens 122 on the beamsplitter pathway 120, and is positioned on an approximate focal plane of the first focusing lens 122, for example, preferably on the approximate focal plane, such that the optical signal in the first wavelength range reaches the photosensitive surface of the first photosensor 130 after traveling through the first diaphragm 330.

In the optical detection device according to the embodiments of the present disclosure, by arranging a focusing lens on the beamsplitter pathway and arranging a diaphragm at a position near the focal plane of the focusing lens, radiated light entering a defined machining region of the rear photosensor through the diaphragm is selected by defining an aperture size of the diaphragm, and hence, radiated light is accurately selected for the machining region, and impacts caused by the vignetting effect of an optical path to intensity of radiated light on the photosensitive surface of the photosensor is reduced. In particular, the first photosensor is an infrared photosensor, and when detecting an optical signal of an infrared radiation wavelength range of the molten pool, the optical signal in the first wavelength range to be received is an infrared radiation signal at a machining point during laser processing. Since the temperature at the center of a keyhole is much higher than the temperature at the periphery of the molten pool during laser processing detection, by providing a diaphragm at the focal plane of a focusing lens, the impacts caused by infrared light radiated from the center of the keyhole onto infrared light in a detection region of interest at the periphery of the molten pool during detection are also reduced.

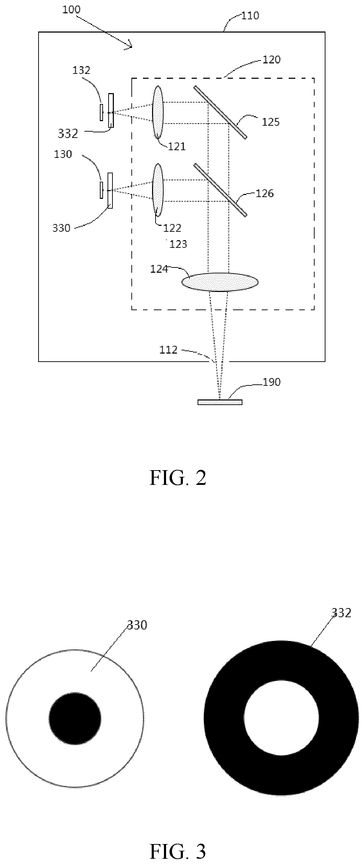

In the case that the optical detection device needs to perform optical detection for a plurality of optical paths, the applicant has found that in some applications, different optical paths have different requirements for shielding the detection region. Hence, referring to FIG. 2, the optical detection device according to the embodiments of the present disclosure further includes a second photosensor 132 and a second diaphragm 332. The second photosensor 132 is configured to receive an optical signal in a second wavelength range from the beamsplitter pathway 120. A second focusing lens 121 is further arranged on the beamsplitter pathway 120, and the beamsplitter pathway 120 is configured to split radiated light into radiated light in at least two different wavelength ranges, output an optical signal in a first wavelength range to the first photosensor 130 through the first focusing lens 122, and output an optical signal in a second wavelength range to the second photosensor 132 through the second focusing lens 121. The optical signal in the first wavelength range is different from the optical signal in the second wavelength range. The second diaphragm 332 is arranged between the second photosensor 132 and the second focusing lens 121, and is positioned on or in the vicinity of a focal plane of the second focusing lens 132, such that the optical signal in the second wavelength range reaches a photosensitive surface of the second photosensor 132 upon traveling through the second diaphragm 332.

In the embodiments of the present disclosure, in the optical detection device, in the case that a plurality of photosensors simultaneously detect the same external laser processing point, different diaphragms are used by means of the beamsplitter pathway 120 and the same or different optical signal wavelength ranges are selected to observe the same or different laser processing regions, such that optical detection means is diversified, and applicability of the optical detection device is enhanced.

Further, the second diaphragm 332 is positioned on the focal plane of the second focusing lens, and an aperture of the first diaphragm 330 is different from an aperture of the second diaphragm 332. Hence, in the case that the optical signal in the first wavelength range is the same as the optical signal in the second wavelength range, for example, both are infrared radiation signal, optical radiation signals around the laser-machined keyhole are acquired using the first diaphragm 330 by employing a center obscuration scheme, and optical radiation signals at the center of the keyhole in laser processing are acquired using a small aperture in the middle of the second diaphragm 332, thereby enabling precise independent detection and signal quality assessment of different regions. Similarly, in the case that the optical signal in the first wavelength range is different from the optical signal in the second wavelength range, the signal in the first wavelength range is an infrared radiation signal, the optical signal in the second wavelength range is a visible radiation signal, signals in an infrared region of interest are acquired using the first diaphragm 330, and signals in a visible region of interest are acquired using the second diaphragm 332, thereby accommodating detection requirements of laser processing in another application scenario.

The second diaphragm 332 is positioned on the focal plane of the second focusing lens 121, and the aperture of the first diaphragm 330 is different from the aperture of the second diaphragm 332. In this case, as illustrated in FIG. 3, the first diaphragm 330 is designed to a center obscuration, and the second diaphragm 332 is designed to an edge obscuration. It may be understood that with respect to different detection requirements, the inner part of the diaphragm may be designed into different shapes. For example, in the center obscuration, a central occlusion plate may be designed into an ellipse, a rectangle, an irregular shape or the like, or may be designed into a plurality of occlusion apertures. In the edge obscuration, the edge may be serrated. The center obscuration and/or the edge obscuration may both support a hybrid scheme of central occlusion and edge occlusion. It may be hence understood that the first diaphragm 330 and/or the second diaphragm 332 is a center obscuration, and radiated light in a specific region in a middle of the diaphragm is filtered by the center obscuration. Actual deformation shapes of the first diaphragm 330 and/or the second diaphragm 332 are not described any further in the embodiments of the present disclosure.

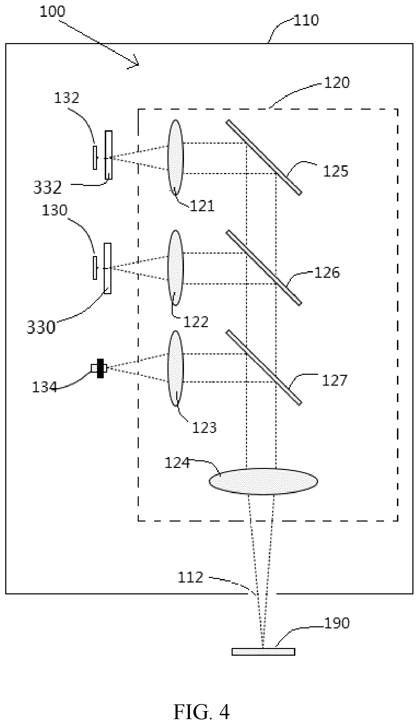

Referring to FIG. 4, the optical detection device according to the embodiments of the present disclosure further includes a calibration light source 134 arranged inside the housing 110. The calibration light source 134 is configured to radiate calibration light to the beamsplitter pathway 120, and radiate the calibration light to an external detection region 190 through the aperture 112 in the housing 110. In the embodiments of the present disclosure, by arranging a calibration light source inside the optical detection device, convenient calibration is achieved during aligning the photosensitive regions of a plurality of internal photosensors, such that the inconvenience of traditional calibration methods involving disassembly of internal optics or repeated calibration of internal optical paths during on-site application of the device is reduced, and hence the user experience of the device is improved; and by arranging the internal diaphragm, during calibration of the internal optical path, the diaphragm is used to assist the positioning of the photosensor is assisted using the diaphragm, and during selecting the detection region, detection is selectively performed for the external detection region, such that alignment and calibration of the optical path is facilitated and the detection accuracy is improved.

It may be understood that in the optical detection device according to the embodiments of the present disclosure, the focusing lens 124 is arranged at the aperture 112 in the housing 110 or outside the optical detection device, wherein the focusing lens 124 establishes an object-image relationship with the first focusing lens 122 and/or the second focusing lens 121, and is configured to collimating radiated light at a machining point of the external detection region into parallel light, and focus the parallel light to the center obscuration by the first focusing lens 122 and/or the second focusing lens 121 after transmitting the parallel light to the first focusing lens 122 and/or the second focusing lens 121 over the beamsplitter pathway 120. The beamsplitter pathway 120 is further configured to radiate calibration light from the calibration light source 134 to the aperture 112, such that the calibration light at the aperture 112 is coaxial with ambient radiated light along an optical axis of the aperture 112. It may be understood that the term "coaxial" herein indicates the same optical path or parallel optical paths.

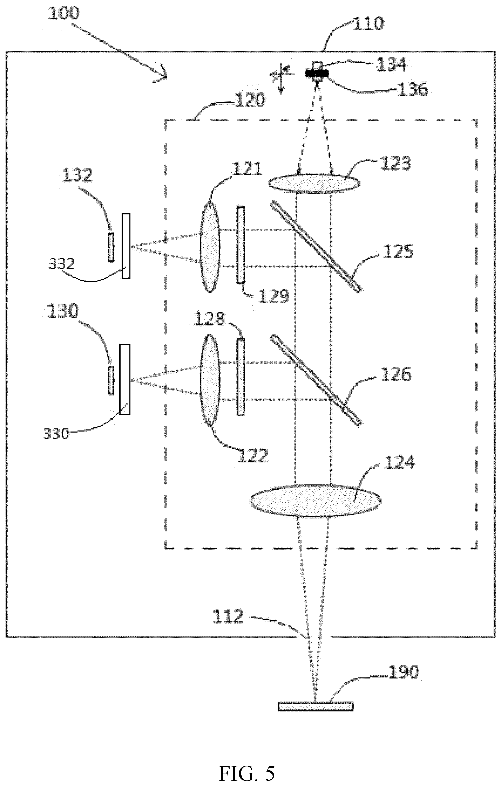

In the embodiments of the present disclosure, during internal debugging before production, the calibration light source 134 serves as a reference for alignment of various optical paths, and various photodiodes (a plurality of photosensors, such as the first photosensor 130 and the second photosensor 132) are all capable of emitting light traveling through the beamsplitter pathway 120 from the calibration light source 134, each with the center thereof being perpendicular to the calibration light source 134. By the beamsplitter pathway 120, the calibration light from the calibration light source 134 is radiated to the aperture 112, such that the calibration light at the aperture 112 is coaxial with the ambient radiated light along the optical axis of the aperture 112. The optical detection device 100 is integrated onto an external laser processing head 1 (referring to FIG. 5), the optical detection device 100 is aligned with a machining laser beam of an external laser processing device using output light of the calibration light source 134 as a baseline of alignment, such that the machining laser beam is coincident with the light output from the calibration light source 134 through the aperture in the housing 110. This not only ensures that an optical signal radiation region of laser processing is coincident with a photosensitive region (which may be a photosensitive surface of a photodiode) inside the optical detection device 100, but also ensures convenience in production, assembly and debugging of the optical detection device 100. In this way, the efficiency of alignment of the optical path is improved.

Further, in the embodiments of the present disclosure, the beamsplitter pathway 120 is composed of a plurality of focusing lenses (121, 122, 123, 124) and a plurality of beamsplitters (125, 126, 127). It may be understood that the related focusing lens may be formed by one or a plurality of optical lenses, and hence the optical path is focused and collimated. The beamsplitter may be a coated lens which is capable of splitting light with respect to optical signals in different optical wavelength ranges, and may separate optical signals in selected wavelength ranges from a primary optical path using coatings with different transmittance and reflectance properties.

In an application scenario of laser processing, radiation from the surface under laser processing needs to be selectively monitored in sections. For example, changes of infrared radiation signals, visible radiation signals, and laser processing reflection signals need to observed from an optical signal radiation region of laser processing, and then quality of laser processing is determined. The infrared radiation signals have a wavelength ranging from 1250 nm to 1700 nm. The visible radiation signals have a wavelength ranging from 400 nm to 700 nm. The laser processing reflection signals have a wavelength of, for example, 915 nm, 1064 nm, 1080 nm, or the like, in practical laser processing. The wavelength of laser processing is related to the wavelength of an actually used laser. In some environments, the wavelength of the infrared radiation signals may be suitably expanded (adjusted) outside the wavelength range of 1250 nm to 1700 nm. In some environments, the wavelength of the visible radiation signals may be suitably expanded (adjusted) outside the wavelength range of 400 nm to 700 nm. Correspondingly, the optical detection device 100 further includes a third photosensor (not illustrated) in addition to the first photosensor 130 and the second photosensor 132. For example, the first photosensor 130 is an infrared photodiode configured to sense infrared radiation signals; the second photosensor 132 is a visible photodiode configured to sensor visible radiation signals; and the third photosensor is a photodiode configured to sense laser reflection signals, and is sequentially stacked above the second photosensor 132 or between the first photosensor 130 and the second photosensor 132. For detection of the optical signals that are reflected from the machining region back to the optical detection device, the photosensors sense the intensity of the laser processing signals in the optical paths of the optical detection device by beamsplitting on the beamsplitter pathway 120.

It may be understood that in the above application scenarios, the beamsplitter pathway 120 is arranged at a light-entrance aperture of the optical detection device 100, and the beamsplitter pathway 120 includes a focusing lens 124 configured to collimate coaxial radiated light from the external detection region, and a plurality of beamsplitters (125, 126, 127) that are sequentially stacked along an axial direction of the coaxial radiated light. Infrared radiation signals are separated by the beamsplitter 126 from the parallel light traveling through the focusing lens 124, and are directed to the first photosensor 130 (which may be an infrared photodiode). In the case that light outside the frequency band of the infrared radiation signals is transmitted through the beamsplitter 126, visible radiation signals are separated by the beamsplitter 125 from the light, and are directed to the second photosensor 132 (which may be a visible photodiode). It may be understood that in the embodiments of the present disclosure, the third photosensor (which may also be a laser sensor, not illustrated) may also be arranged, and the beamsplitter (not illustrated) may also be arranged. Hence, in the case that light outside the frequency bands of the infrared radiation signals and the visible radiation signals is transmitted through the beamsplitter 125, a subsequently stacked beamsplitter (not illustrated) continuously separates laser reflection signals from the light, and directs the separated laser reflection signals to the third photosensor. It may be understood that in some special applications, photosensors and beamsplitters of other frequency bands may be further stacked to the optical detection device 100. In order to calibrate the light in a plurality of paths split by the beamsplitter, the beamsplitter pathway 120 further includes a focusing lens 123 configured to converge calibration light. The calibration light emitted by the calibration light source 134 is collimated by the focusing lens 123 and then directed to the coaxial radiated light, such that the calibration light is coincident with reflection light in an optical signal radiation region on the machined surface in the beamsplitter pathway 120. It may be understood that in some application scenarios, since the optical detection device 100 is mounted on one side of the laser processing head, external radiated light is indirectly acquired by acquiring incoming light of the laser processing head. In this case, the focusing lens 123 may be a field lens arranged on one side of the laser processing head, and in this situation the optical detection device 100 may not include the focusing lens 123 on the body thereof. Furthermore, the present disclosure may be implemented by arranging a focusing lens at the aperture 112, or by using a focusing lens outside the optical detection device, or by acquiring external radiated light using a focusing lens arranged on the beamsplitter pathway 120 inside the aperture 112. Furthermore, according to different application scenarios, the focusing lens is arranged at different positions to flexibly achieve the calibration of a multi-optical path detection device, and then in order to maintain the calibration light and the machining laser, the external radiated light to be detected is consistent on the main axis of the aperture or beamsplitter pathway or the optical axis of the machining laser output in the multi-optical path detection scheme.

Referring to FIG. 5, another schematic structural diagram of the optical detection device 100 according to some embodiments of the present disclosure is illustrated. In the embodiments, the calibration light source 134 is arranged at the end of the beamsplitter pathway 120, and at the rear end of the beamsplitter 126 and the beamsplitter 125 in the direction of incidence of radiation. That is, the beamsplitter pathway 120 still receives coaxial radiated light from the external detection region 190 through the aperture 112 defined in the housing 110, such that the radiated light sequentially travels through the beamsplitter 126 and the beamsplitter 125, and then the coaxial radiated light from the outer detection region is split in terms of wavelength range, and then directed to the first photosensor 130 through the first diaphragm 330 and directed to the second photosensor 132 through the second diaphragm 332. The calibration light source 134 is arranged at a rear end of the beamsplitter 125, such that the calibration light is transmitted through the beamsplitter 125 and the beamsplitter 126, and then converged by the focusing lens 124 onto the external detection region 190.

Apparently, the beamsplitter pathway 120 includes a plurality of beamsplitters (125, 126) arranged in parallel along the optical axis of the aperture 112 in sections and defining a specific angle with the optical axis; wherein each of the beamsplitters is configured to split the ambient radiated light from the optical axis of the aperture 112 to a corresponding photosensor; and one or more of a filter, a neutral density filter, and a focusing lens is arranged between each of the beamsplitters and the corresponding photosensor. In the case that the beamsplitter, by way of being coated, is capable of screening optical signals in a specific wavelength range to the corresponding photosensor, the optical filter may not be required. However, in order to increase the beamsplitting accuracy, the filter may be further added. In one situation, the filter may integrate a photo-isolation effect to reduce the intensity of the radiated light, thereby adapting a sensing range of the photosensor. Thus, the neutral density filter may be omitted. In another situation, the collimated or astigmatic light from the beamsplitter may be transmitted directly to the photosensor, and the focusing lens may not be required.

It may be understood that the calibration light source 134 separately radiates, by one of the plurality of beamsplitters arranged on the beamsplitter pathway, the calibration light from the calibration light source 134 to the aperture 112, such that the calibration light at the aperture 112 is coaxial with the ambient radiated light along the optical axis of the aperture 112. Furthermore, in the embodiments of the present disclosure, considering the wavelength characteristics of the calibration light source 134, the calibration light may be introduced into the optical path system without losing too much energy of the main optical path by specifically coating the corresponding beamsplitter.

In the embodiments, the beamsplitter pathway 120 is further provided with a filter 128 between the beamsplitter 126 and the first photosensor 130 for more effectively screening out optical signals in a photosensitive wavelength range of the first photosensor 130. The beamsplitter pathway 120 is further provided with a filter 129 between the beamsplitter 125 and the second photosensor 132 for more effectively screening out optical signals in a photosensitive wavelength range of the second photosensor 132. It may be understood that the beamsplitter pathway may also be similarly designed to have a filter arranged between the corresponding beamsplitter and photosensor to more accurately screen out optical signals in a specified wavelength range. In order to adjust the degree of absorption of optical signals in a specific wavelength range by the photosensor, in the embodiments, one or more neutral density filters (not shown) are correspondingly added before or after the optical filter to adjust the intensity of input/output signals of the photosensor.

Further, in this embodiment, the optical detection device 100 further includes a position adjustment mechanism 136. The calibration light source 134 is removably coupled to the position adjustment mechanism 136. The calibration light source 134 is moved in a plane or three-dimensional space by the position adjustment mechanism 136, and the first photosensor 130 and the second photosensor 132 or the corresponding photosensors on other beamsplitter pathways are aligned and mounted by virtue of the movement. It may be understood that the position adjustment mechanism 136 may also be secured integrally to the calibration light source 134 and then secured to the housing 110 upon alignment of the plurality of sensors (130, 132).

The optical detection device 100 according to the embodiments of the present disclosure is applicable to an on-line detection system with a plurality of photosensors during laser welding, and the calibration light source 134 may be a visible laser light source, such as a laser light source consistent with guiding red light in most laser processing systems. In one aspect, monochromaticity and directionality of the laser light source are better, and further, the chromatic aberration caused by a wavelength difference between the laser light in the laser processing system and the machining laser is minimized.

In one application scenario, the optical detection device 100 according to the embodiments of the present disclosure includes a beamsplitter 126, a focusing lens 122, at least one first photosensor 130, and at least one calibration light source 134. For calibration of the position of a related device using the calibration light source 134, optionally, a CCD camera with a lens may be removably arranged at the first photosensor 130 during calibration, as a substitution for manual visual alignment. To improve alignment accuracy, a calibration scale alignment plate may be introduced on the external detection region 190 of the laser-machined surface to increase the accuracy of change in position movement. Furthermore, when reflected light of the calibration light source or the like radiated from the external detection region 190 is converged to the position of the first photosensor 130 through the focusing lens 122, by replacing the position of the first photosensor 130 with the CCD camera, or by observing changes in the light spot on the calibration scale alignment plate from the calibration light source through a circulator/coupler in the light splitting path using the CCD camera, the calibration position is determined. Alternatively, the focusing lens 124 is a focusing lens or a set of focusing lenses in which a single lens or a set of lenses converges the machining laser in the laser processing system.

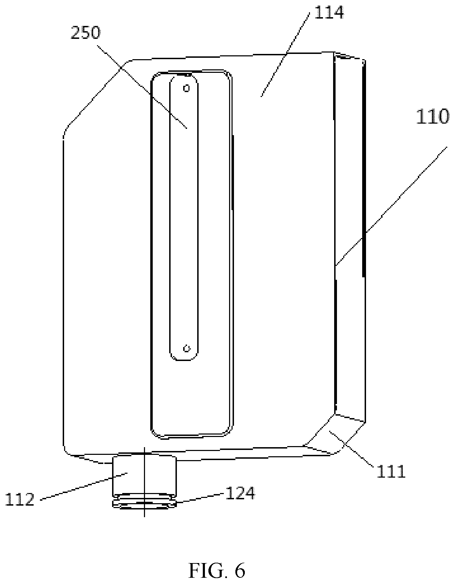

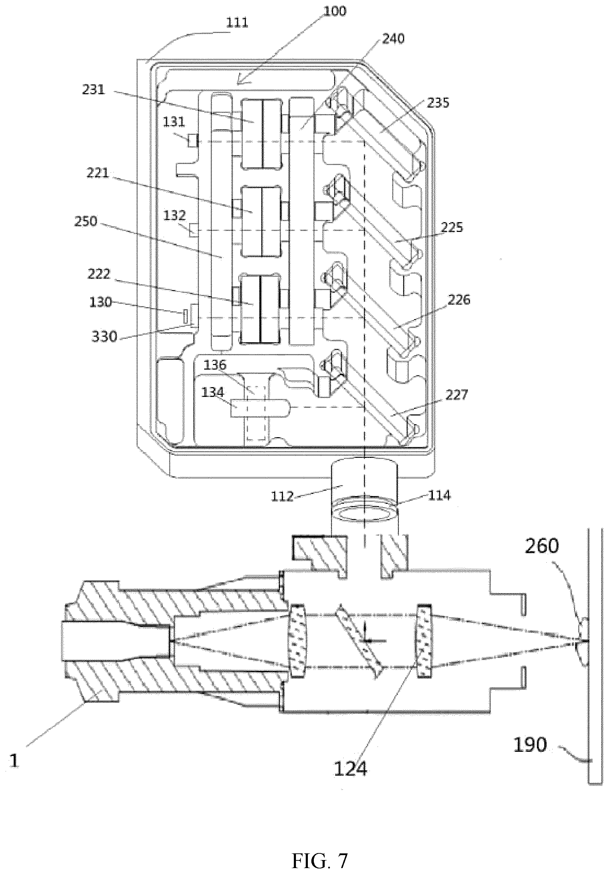

Referring to FIGS. 6 and 7 together, a schematic integral structural diagram of the optical detection device 100 according to some embodiments of the present disclosure. In the optical detection device 100 according to the embodiments, the housing 110 includes an integral bottom case 111 and a cover plate 114 secured to the top of the bottom case 111. The bottom case 111 includes a reference bottom surface and a plurality of outer sidewalls surrounding the reference bottom surface that are integrally molded, the reference bottom surface and the plurality of outer sidewalls define an internal cavity. An aperture 112 is defined in one of the outer sidewalls, and radiated light is received from an external detection region 190 through the aperture 112. In the embodiments of the present disclosure, a calibration light source 134 is arranged in the integral bottom case 111, such that the calibration light source 134 is firmly secured to the bottom case 111 upon completion of factory calibration, which reduces the inconvenience of replacing the calibration light source in the subsequent factory application and simplifies the calibration scheme in the factory application environment.

In the embodiments of the present disclosure, the radiated light entering through the aperture 112 may come from the optical path in the external laser processing head 1, and the radiated light coming from the machining point 260 of the external detection region 190 is collimated by the focusing lens 124 and then split to the aperture 112. In one example, a focusing lens 124 through which the radiated light from the external detection region 190 is converged is further arranged at the aperture 112.

A reference bottom surface of the bottom case 111 extends upwards to form a mount integrally molded with the bottom case. It may be understood that the mount includes one or more of a beamsplitter holder, a focusing lens holder, a neutral density filter holder, a filter holder, a sensor circuit board holder, or a calibration light source holder. The holders may include one or more of U-shaped slot structures, a plurality of post limit structures, or other mechanical snap mechanism. By the holders, the beamsplitter pathway 120, the first photosensor 130, the second photosensor 132, the third photosensor 131, and the calibration light source 134 in the optical detection device 100 are embedded and secured. Hence, the beamsplitter pathway 120 receives the radiated light from the external detection region 190 through the aperture 112 in the housing 110, and the beamsplitter pathway 120 includes one or more of a beamsplitter, a focusing lens, a neutral density filter, or a filter. The first photosensor 130 is configured to receive optical signals in a first wavelength range from the beamsplitter pathway 120 through a first diaphragm 330. The second photosensor 132 is configured to receive optical signals in a second wavelength range from the beamsplitter pathway 120. The third photosensor 131 is configured to receive optical signals in a third wavelength range from the beamsplitter pathway 120. The calibration light source 134 is configured to radiate calibration light to the beamsplitter pathway 120, and radiate the calibration light to the external detection region through the aperture 112 in the housing 110. The calibration light from the calibration light source 134 and the radiated light from the external detection region are coaxial on the axis of the aperture 112 in the housing 110 through the beamsplitter pathway 120. The optical signal in the first wavelength band, the optical signal in the second wavelength band, and the optical signal in the third wavelength band are different from each other. It may be understood that the optical signals in the first wavelength range are infrared radiation signals having a wavelength ranging from 1250 nm to 1700 nm. The optical signals in the second wavelength range are visible radiation signals having a wavelength ranging from 400 nm to 700 nm. The optical signals in the third wavelength range are laser processing reflection signals from the outside. The optical signal in the first wavelength range being different from the optical signal in the second wavelength range different may mean that the wavelengths of the two optical signals are completely different, or the optical signals have an overlapping wavelength in a portion thereof.

In this embodiment, optionally, the housing 110 may be provided with a focusing lens holder, a beamsplitter holder, a neutral density filter holder, and a filter holder that are sequentially arranged along the optical path. It may be understood that in some applications the arrangement sequence of the related mounts may be different. For example, a focusing lens mount, a beamsplitter mount, a neutral density filter mount, and a filter mount may be sequentially arranged along the optical path. In some configurations, the focusing lens mount may be canceled if the radiated light from the outside is collimated parallel light. In some configurations, some of the mounts may implement multiple functions, such as the filter mount and the neutral density filter mount may be one that accommodates both the filter and the neutral density filter. In order to better embed related lenses, photosensors, circuit boards or other internal components into the mounts, reference may be made to Chinese Patent No. CN202023067916.9 entitled "LENS MOUNT FOR OPTICAL MODULE AND OPTICAL MODULE." After the related components are detachably clamped or secured via the matched lens mount or other structures, the lens mount is customized to such that a plurality of different devices are matched with devices of the same or similar specifications in the mount. Furthermore, to accommodate various changes in optical parameters of lenses or sensors in different environments, a batch of housings 110 with the same structure may be precisely adapted to accommodate various types of devices to meet the requirements of different application scenarios. This increases the precision requirements of a plurality of optical sensors for high-precision photoelectric signal consistency, thus enhancing the practicality of the product.

As shown in FIG. 7, in the optical detection device 100 according to the embodiments of the present disclosure, a plurality of parallel beamsplitter holders (227, 226, 225, 235) are embedded in the mount inside the housing 110 on the optical axis along which receiving the radiated light from the external detection region 190 through the aperture 112. Each of the parallel beamsplitter mounts defines a 45-degree angle with the optical axis. Different beamsplitter mounts accommodate beamsplitters in which different coatings are respectively sandwiched. The beamsplitter holder 227 is configured to split calibration light of the calibration light source 134 onto the optical axis of the aperture 112. The beamsplitter holder 226, the beamsplitter holder 225, and the beamsplitter holder 235 are respectively configured to receive detection beams and dividing the detection beams into different frequency bands of emergent beams onto focusing lens holders (222, 221, 231). Focusing lens are mounted in the focusing lens holders (222, 221, 231), which are configured to converge the emergent beams from the beamsplitter holders (226, 225, 235).

A neutral density filter is mounted in a neutral density filter holder 240 and is arranged between the beamsplitter holder and the focusing lens holder, and is configured to reduce the intensity of emergent light corresponding to the beamsplitter holders (226, 225, 235). A filter lens is mounted in the filter holder 250, and is arranged between the focusing lens base and the photosensor; and different filters in the filter lens base are correspondingly coated, such that radiated light in a corresponding optical band is further screened out to the corresponding photosensor. The photosensors (130, 132, 131) are configured to receive emergent light of the corresponding filter mount 250, and output detection electrical signals upon photoelectric conversion. It may be understood that the filter holder 250 may be interchangeable with the neutral density filter holder 240. It may be understood that, in conjunction with the cover plate 114 of the housing 110 illustrated in FIG. 3, a slot is defined in the cover plate 114, and through the slot, the filter holder 250 is insertable into a mount inside the housing 110, such that when the optical detection device 100 is used on-site by a user, the corresponding filter mount 250 is replaced in response to an on-site signal requirement for an optical radiation signal band, and optical signals in a specified wavelength range are screened out.

In the embodiments, the detection beam is incident at 45 degrees from the front face of the calibration light source 134 corresponding to the beamsplitter holder 227. Since the calibration light source does not need to receive external radiated light, the beamsplitter holder 227 transmits all the detection beams from the outside to the corresponding beamsplitter holder of the photosensor. The beamsplitter mount corresponding to the photosensor may hold a 5:5 beamsplitter, i.e., a semi-transmissive and semi-reflective beamsplitter. When the beamsplitter is a 5:5 beamsplitter, upon receiving detection beams, the beamsplitter holder 226 corresponding to the first photosensor 130 reflects one half of the received detection beams towards the focusing lens holder 240 and transmits the other half of the received detection beams towards the beamsplitter holder 225 corresponding to the second photosensor 132. Similarly, the second photosensor 132 corresponds to the beamsplitter holder 225, the third photosensor 131 corresponds to the beamsplitter holder 235, and the N^{th} photosensor corresponds to the N^{th} beamsplitter mount.

In the embodiments, the beamsplitter mount has a structure in which two posts clamp the beamsplitter holder, and a first plug-and-play slot is defined in either side of the two posts. The beamsplitter holder may be directly inserted into the first plug-and-play slot, and the two posts clamp the beamsplitter mount. The beamsplitter holder in this design is closely matched with the beamsplitter mount, without securely attaching the beamsplitter holder to the housing, such that robust firmness is achieved, but also lens replacement is convenient and quick. For better understanding of the internal structure and assembly relationship of the photoelectric components of the optical detection device 100 of the embodiments of the present disclosure, reference may be made to the Chinese Patent No. CN202310997745.9 entitled with "INTEGRAL HOUSING FOR laser processing DETECTION MODULE" published on October 13, 2023 by the applicant of the present disclosure.

In conjunction with FIGS. 4 to 7, some embodiments of the present disclosure propose an optical path calibration method for use in an optical detection device. Herein, the calibration light source 134 may be a visible laser light source. The laser beam generated by the calibration light source 134 is collimated into parallel light by the focusing lens 123, and a part of the collimated light is reflected by the beamsplitter 127 and converged to the center of the external detection region 190 through the focusing lens 124. Optionally, the center of the external detection region 190 may be determined using a calibration scale. The center of the external detection region 190 (center of the calibration scale) is made coaxial with the centers of the focusing lens 124, the beamsplitter 127, and the beamsplitter 126. A part of the collimated light reflected by the beamsplitter 127 from the calibration light source 134 is coaxial with the center.

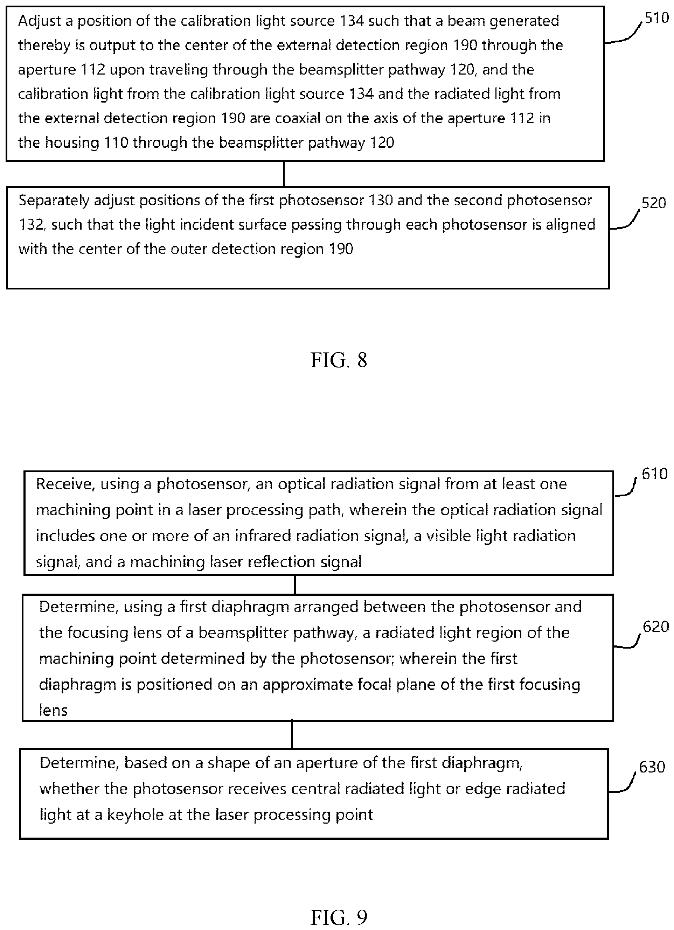

Referring to FIG. 8, the optical path calibration method according to the embodiments of the present disclosure includes the following steps.

Step 510: A position of the calibration light source 134 is adjusted such that a beam generated thereby is output to the center of the external detection region 190 through the aperture 112 upon traveling through the beamsplitter pathway 120, and the calibration light from the calibration light source 134 and the radiated light from the external detection region 190 are coaxial on the axis of the aperture 112 in the housing 110 through the beamsplitter pathway 120. It may be understood that the center of the external detection region 190 may be a calibration point for laser processing, and the center may be a point that is convenient to adjust and observe, which is not limited herein.

Step 520: Positions of the first photosensor 130 and the second photosensor 132 are separately adjusted, such that the light incident surface passing through each photosensor is aligned with the center of the outer detection region 190.

In the optical path calibration method for use in an optical detection device 100 according to the embodiments of the present disclosure, the position of the calibration light source 134 internally arranged in the optical detection device is configured to be adjustable, such that the calibration light source 134 is coaxial with the optical path of the radiated light when exiting through a light exit port of the optical detection device 100. Further, when the optical detection device 100 is mounted on a laser processing head (not illustrated), the machining laser and the calibration laser may also be coaxial to the same machining point. Upon determining the position of the calibration light source, by adjusting the positions of the plurality of photosensors, the consistency of the internal optical path when the optical detection device leaves the factory is further ensured.

Further, step 510 specifically includes: arranging the calibration light source 134 on the position adjustment mechanism 136; wherein adjustment by the position adjustment mechanism 136 may translate the calibration light source 134 in an XY plane or may cause an angular offset to the calibration light source 136 in an XY direction. The calibration light source 134 is adjusted by the position adjusting mechanism 136 such that a part of the collimated light generated by the laser beam reflected by the center of the beamsplitter 127 is coincident with the center of the external detection region 190 (the center of the calibration scale) and the optical axis of the focusing lens 124, and the calibration light source 136 is secured to the housing. It may be understood that by removing the adjustment mechanism 136 and securing the calibration light source 136 to the housing, or retaining and locking the position of the adjustment mechanism 136, the calibration light source 136 remains unchanged with respect to the major axis of the optical path. The calibration scale on the external detection region 190 is arranged on the focal plane of the focusing lens 124, and the convergence point of the calibration light source 134 is aligned to the center of the external detection region 190, i.e., the convergence point of the calibration light source 134 is coincident with the center cross of the calibration scale. The centers of beamsplitter 127 and beamsplitter 126 are made coaxial. The optical axis of the focusing lens 122 is arranged to be coincident with the optical axis and the focusing lens 123, and the focusing lens 122 and the focusing lens 123 are placed on one side of the beamsplitter 127.

Further, step 520 may be as follows: A first diaphragm 330 is arranged near the position of the first photosensor 130, i.e., on the focal plane of the focusing lens 122, and the first diaphragm 330 is observed by a CCD camera with a lens at a distal end of the optical axis of the focusing mirror 122, such that the first diaphragm 330 is clearly imaged on the camera side. According to the imaging principle, an object-image relationship is established between the first diaphragm 330 on the focal plane of the focusing lens 122 and the calibration scale 260 on the focal plane of the focusing lens 124, and then the CCD camera is capable of clearly imaging the first diaphragm 330 and the calibration scale 260 at the same time. The image of the CCD camera is observed, and the position of the first diaphragm 330 is translated and adjusted in the XY plane, such that the center of the first diaphragm 330 is coincident with the center of a central cross line of the calibration scale 260. The first photosensor 130 is placed against the first diaphragm 330, and the first photosensor 130 is translated in the XY plane, such that the center of the first photosensor 130 is aligned with the center of the first diaphragm 330.

Optionally, upon adjusting the position of the first diaphragm 330 in step 520, the first diaphragm 330 may be retained or canceled. In dismantling the first diaphragm 330, the position of the first photosensor 130 is fine-tuned along the optical axis towards the direction of the first diaphragm 330 with a fine-tuning amount being the thickness of the first diaphragm 330, and the first photosensor 130 is secured.

It may be understood that the same steps as described above are repeatedly performed to adjust the positions of the second photosensor 132, the third photosensor 131, and the other photosensors. The details are not described herein any further.

Through the calibration steps as described above, the internal optical path of the optical detection device 100 is debugged. In this case, the light emitted by the calibration light source 134 is coincident with the optical axis of the optical detection device 100.

When introducing the optical detection device 100 into a factory machining environment, the optical detection device 100 is connected to the laser processing head via an optical path adapter module. For alignment of the calibration light source 134 of the optical detection device 100 with guiding red light or machining laser of the laser processing head, a defocusing amount of the workbench of the laser processing device may be changed. In different defocusing amounts, a refractive angle of the lens in the optical path adapter module may be adjusted, such that the light spot from the calibration light source 134 in the optical detection device 100 is coincident with the guiding red light or machining laser from the laser processing head to a solder point on the workbench. Accordingly, the optical detection device 100 according to the embodiments of the present disclosure achieves internal calibration prior to delivery from factory by the internal calibration light source 134. This ensures that alignment of the optical paths of the plurality of detection optical components within the optical detection device 100 is achieved prior to delivery from factory. Upon delivery from factory of the optical detection device 100, during on-site calibration of the optical detection device 100 in the production environment, the alignment of the optical axis of the calibration light source 134 with the axis of the machining laser is compared. This allows precise alignment of the optical detection device 100 with the optical signal radiation region in laser processing under different process parameters for laser welding, such that more accurate and higher signal-to-noise ratio data is acquired.

In the embodiments of the present disclosure, the optical detection device 100 may incorporate a beamsplitter to divide the light to be tested into a plurality of wavelength ranges according to test requirements, and the photodiode responsive to these wavelength ranges may be aligned with the light source using this method.

The sensor module according to the present disclosure may also incorporate a filter or a diaphragm in front of the photodiode according to test requirements to optimize the test signal.

In some applications, the calibration light source 134 is a visible laser light source, wherein the laser light source has a wavelength of 650 nm.

In some embodiments, a collimated light source is selected for the calibration light source 134, which eliminates the need for using a focusing lens 123 to collimate the beam.

In some embodiments, during calibration, the first diaphragm 330 arranged at the focal plane of the focusing lens 122 may be a center obscuration or a diaphragm that blocks light at both the center and the edge. By arranging the first diaphragm 330, calibration of the optical path for the optical sensor is facilitated, and selection of the specific direction of the laser processing region is additionally promoted, thereby improving the monitoring accuracy of the optical sensor.

Further, referring to FIG. 9, some embodiments of the present disclosure further provide a detection method for laser processing. The method includes the following steps:
step 610, receiving, using a photosensor, an optical radiation signal from at least one machining point in a laser processing path, wherein the optical radiation signal includes one or more of an infrared radiation signal, a visible light radiation signal, and a machining laser reflection signal;
step 620, determining, using a first diaphragm arranged between the photosensor and the focusing lens of a beamsplitter pathway, a radiated light region of the machining point determined by the photosensor; wherein the first diaphragm is positioned on an approximate focal plane of the first focusing lens; and
step 630, determining, based on a shape of an optical aperture of the first diaphragm, whether the photosensor receives central radiated light or edge radiated light at a keyhole at the laser processing point.

In the embodiments of the present disclosure, by arranging a focusing lens on the beamsplitter pathway and arranging a diaphragm at a position near the focal plane of the focusing lens, radiated light entering a defined machining region of the rear photosensor through the diaphragm is selected by defining an aperture size of the diaphragm, and hence, radiated light is accurately selected for the machining region, and impacts caused by the vignetting effect of an optical path to intensity of radiated light on the photosensitive surface of the photosensor is reduced.

It may be understood that the first diaphragm is a center obscuration, and radiated light at a center of the keyhole at the laser processing point is filtered by the center obscuration.

In the present disclosure, for brevity of description, the actions or steps are all described as a series of action combinations. However, a person skilled in the art shall understand that the embodiments of the present disclosure are not subjected to limitations of the action sequences described above. Further, based on the embodiments of the present disclosure, some steps may be performed in another or other sequences or may be simultaneously performed. In addition, a person skilled in the art should also know that the steps involved in the embodiments described in this specification are not mandatory ones of the embodiments of the present disclosure.

Although the present disclosure has been described in conjunction with various embodiments, those skilled in the art, by examining the drawings, the disclosure, and the appended claims, may understand and implement other variations of the disclosed embodiments in practicing the present disclosure. Unless the context requires otherwise, the term "comprise" and various derivatives thereof such as the third-person singular form "comprises" and the present participle form "comprising" throughout the claims and description are construed as an open and inclusive meaning, i.e., "including, but not limited to," and the term "a" or "an" means two or more unless otherwise specified. Some measures are recited in mutually different dependent claims; however, this does not imply that these measures may not be combined to achieve a beneficial effect.

Persons of ordinary skill in the art may understand that all or a part of the steps in the methods according to the above embodiments may be performed by the related hardware of a terminal device which is instructed by a program. The program may be stored in a computer-readable storage medium. The storage medium may include: a flash memory disk, a read-only memory (ROM), a random-access memory (RAM), a magnetic disc or an optical disc or the like.

Described above are preferred embodiments of the present disclosure. It should be noted that persons of ordinary skill in the art may derive other improvements or polishments without departing from the principles of the present disclosure. Such improvements and polishments shall be deemed as falling within the protection scope of the present disclosure.

## Claims

1. An optical detection device (100), comprising: a housing (110), a beamsplitter pathway (120), a first photosensor (130), and a first diaphragm (330), wherein
an aperture (112) is arranged in the housing (110), and the housing (110) is configured to receive radiated light from an external detection region (190) through the aperture (112), and the first photosensor (130) is configured to process the radiated light from the aperture (112) through the beamsplitter pathway (120) which is built-in the housing (110);
the beamsplitter pathway (120) comprises a first focusing lens (122) and is configured to receive radiated light from the external detection region (190) entering the housing through the aperture (112), and converge the radiated light onto a photosensitive surface of the first photosensor (130) through the first focusing lens (122);
the first photosensor (130) is configured to receive an optical signal in a first wavelength range from the beamsplitter pathway (120); and
the first diaphragm (330) is arranged between the first photosensor (130) and the first focusing lens (122) on the beamsplitter pathway (120), and is positioned on an approximate focal plane of the first focusing lens (122), such that the optical signal in the first wavelength range reaches the photosensitive surface of the first photosensor (130) after traveling through the first diaphragm (330).

2. The optical detection device (100) according to claim 1, wherein the first diaphragm (330) is positioned on a focal plane of the first focusing lens (122); and the first photosensor (130) is an infrared photosensor, and is configured to receive an optical radiation signal of an infrared wavelength range at a machining point during laser processing as the optical signal in the first wavelength range.

3. The optical detection device (100) according to claim 1, further comprising: a second photosensor (132) and a second diaphragm (332); wherein
a second focusing lens (121) is further arranged on the beamsplitter pathway (120), and the beamsplitter pathway (120) is configured to split radiated light into radiated light in at least two different wavelength ranges, output an optical signal in a first wavelength range to the first photosensor (130) through the first focusing lens (122), and output an optical signal in a second wavelength range to the second photosensor (132) through the second focusing lens (121), wherein the optical signal in the first wavelength range is different from the optical signal in the second wavelength range; and
the second diaphragm (332) is arranged between the second photosensor (132) and the second focusing lens (121), and is positioned on or in the vicinity of a focal plane of the second focusing lens (121), such that the optical signal in the second wavelength range reaches a photosensitive surface of the second photosensor (132) upon traveling through the second diaphragm (332).

4. The optical detection device (100) according to claim 3, wherein the second diaphragm (332) is positioned on the focal plane of the second focusing lens (121), and an aperture of the first diaphragm (330) is different from an aperture of the second diaphragm (332).

5. The optical detection device (100) according to any one of claims 1, 2, and 3, wherein the first diaphragm (330) and/or the second diaphragm (332) is a center obscuration, and radiated light in a specific region in a middle of the diaphragm is filtered by the center obscuration.

6. The optical detection device (100) according to claim 5, further comprising: a calibration light source (134) arranged inside the housing (110), wherein the calibration light source (134) is configured to radiate calibration light to the beamsplitter pathway (120), and radiate the calibration light to an external detection region through the aperture.

7. The optical detection device (100) according to claim 5, wherein
a focusing lens (124) is arranged at the aperture (112) or outside the optical detection device (100), wherein the focusing lens (124) establishes an object-image relationship with the first focusing lens (122), and is configured to collimate radiated light at a machining point of the external detection region into parallel light, and focus the parallel light to the center obscuration by the first focusing lens (122) after transmitting the parallel light to the first focusing lens (122) over the beamsplitter pathway (120); and
the beamsplitter pathway (120) is further configured to radiate calibration light from a calibration light source (134) to the aperture (112), such that the calibration light at the aperture (112) is coaxial with ambient radiated light along an optical axis of the aperture (112).

8. The optical detection device (100) according to claims 2 or 3, wherein
the beamsplitter pathway (120) comprises a plurality of beamsplitters arranged in parallel along an optical axis of the aperture in sections and defining a specific angle with the optical axis; wherein
each of the beamsplitters is configured to split the ambient radiated light from the optical axis of the aperture to a corresponding photosensor; and
one or more of a filter, a neutral density filter, and a focusing lens is arranged between each of the beamsplitters and the corresponding photosensor.

9. The optical detection device (100) according to claim 8, wherein the calibration light source (134) is arranged at a tail end of a last beamsplitter distant from the aperture (112), such that the calibration light is successively transmitted through the plurality of beamsplitters arranged in parallel and is converged onto an external detection region through the focusing lens.

10. The optical detection device (100) according to claim 9, wherein the calibration light source (134) separately radiates, by one of the plurality of beamsplitters arranged on the beamsplitter pathway, calibration light from the calibration light source (134) to the aperture (112), such that the calibration light at the aperture (112) is coaxial with ambient radiated light along an optical axis of the aperture (112).

11. The optical detection device (100) according to claim 1, wherein the housing (110) comprises an integral bottom case (111) and a cover plate (114) securely attached on a top of the bottom case (111), wherein
the bottom case (111) comprises a reference bottom surface and a plurality of outer sidewalls surrounding the reference bottom surface that are integrally molded, the reference bottom surface and the plurality of outer sidewalls define an internal cavity; and
the aperture (112) is defined in one of the outer sidewalls, and the radiated light is received from the external detection region through the aperture;
wherein the reference bottom surface of the bottom case extends upwards to form a mount integrally molded with the bottom case (111);
wherein the mount comprises one or more of a beamsplitter holder (226, 225, 235), a focusing lens holder (222, 2221, 231), a neutral density filter holder (240), a filter holder (250), or a calibration light source holder; and
wherein a beamsplitter pathway (120), a first photosensor (130), a second photosensor (132), and a calibration light source (134) are embedded or secured via the mounting base; wherein the beamsplitter pathway (120) comprises one or more of a beamsplitter, a focusing lens, a neutral density filter, or a filter.

12. A detection method for laser processing, applicable to an optical detection device (100) comprising a photosensor (130), a first diaphragm (330), and a focusing lens (122) of a beamsplitter pathway (120), the method comprising:
receiving (610), through the photosensor (130), an optical radiation signal from at least one machining point in a laser processing path, wherein the optical radiation signal comprises one or more of an infrared radiation signal, a visible light radiation signal, and a machining laser reflection signal;
determining (620), based on the first diaphragm (330) arranged between the photosensor (130) and the focusing lens of a beamsplitter pathway (120), a radiated light region of the machining point determined by the photosensor (130), wherein the first diaphragm is positioned on an approximate focal plane of the first focusing lens; and
determining (630), based on a shape of an optical aperture (112) of the first diaphragm (330), whether the photosensor (130) receives central radiated light or edge radiated light at a keyhole at the laser processing point.

13. The method according to claim 12, applicable to an optical detection device (100) as defined in any one of claims 1-12, wherein the first diaphragm (330) is a center obscuration, and radiated light at a center of the keyhole at the laser processing point is filtered by the center obscuration.
